# FASCICULE DE BREVET EUROPEEN

(11) **EP 3 196 371 B1**
(45) Date de publication et mention de la délivrance du brevet: **12.09.2018**
(21) Numéro de dépôt: 17150173.7
(22) Date de dépôt: 03.01.2017
(51) Int. Cl.: E04B 1/80, E04F 13/24, E04F 13/08

(54) **MODULE INCLUANT UN PANNEAU ISOLANT SOUS VIDE, ET PROCÉDÉ D'ISOLATION THERMIQUE, PERMETTANT UNE INSPECTION DU PANNEAU**
MODUL, DAS EIN VAKUUM-DÄMMPANEEL UMFASST, UND VERFAHREN ZUR WÄRMEDÄMMUNG, DIE EINE INSPEKTION DES PANEELS ZULÄSST
MODULE COMPRISING A VACUUM INSULATION PANEL, AND METHOD, ALLOWING AN INSPECTION OF THE PANEL

(30) Priorité: 21.01.2016 FR 1650461
(43) Date de publication de la demande: 26.07.2017
(73) Titulaire: Electricité de France, 75008 Paris (FR)
(72) Inventeur: LABBE, Sébastien, 77210 AVON (FR); PETIOT, Philippe, 77670 SAINT MAMMES (FR); COLMET DAAGE, Mathilde, 77300 FONTAINEBLEAU (FR); DUFORESTEL, Thierry, 77250 MORET SUR LOING (FR); BERNARD, Jean-David, 77190 DAMMARIE LES LYS (FR)
(74) Mandataire: Cabinet Plasseraud

(56) Documents cités:
- WO-A1-2013/085983
- US-A- 4 817 699
- US-A1- 2011 271 626

## Description

La présente invention concerne, dans le domaine du bâtiment, les installations d'isolation thermique utilisées notamment pour le doublage de paroi. L'invention concerne également un procédé d'isolation thermique et un module composite permettant une inspection de l'intégrité du panneau PIV.

Les éléments PIV comprennent de façon connue en soi un matériau de coeur poreux isolant (par exemple à structure micro-cellulaire ou nano-cellulaire à cellules ouvertes) maintenu sous vide par une enveloppe barrière garantissant l'étanchéité aux gaz. L'enveloppe barrière est souple et intègre généralement un film thermo-soudable. Ces panneaux forment des plaques typiquement rigides, d'épaisseur sensiblement constante, et présentent de grandes tailles, par exemple 600 mm de largeur et 1200 mm de longueur (d'autres largeur, par exemple de 100, 300 mm, 400, 500 jusqu'à à 1200 mm étant bien entendu disponibles, la longueur variant généralement entre 500 et 2000 mm). La taille de ces panneaux conviendrait donc pour le recouvrement de parois de bâtiments à des fins d'isolation thermique. De plus, la performance thermique de ces panneaux élémentaires conduit à des épaisseurs qui peuvent être réduites pour minimiser l'encombrement du module composite, l'épaisseur d'un panneau pouvant être inférieure à 60 mm, et de préférence inférieure à 35 mm. US 2011/0271626 décrit des assemblages d'isolation thermique.

Dans le domaine, on qualifie de super isolants thermiques des matériaux présentant, à température ambiante, un niveau de conductivité thermique inférieure à 25 mW m⁻¹ K⁻¹. Les panneaux PIV ont une conductivité thermique inférieure à 7 mW m⁻¹ K⁻¹, et plus préférentiellement inférieure à 5 mW m⁻¹ K⁻¹.

Dans les panneaux élémentaires de type PIV, tous les gaz présents sont évacués du matériau poreux super isolant avant un conditionnement sous vide au sein d'une enveloppe barrière souple généralement constituée (de façon connue en soi) d'un film thermo-soudable pouvant être métallisé qui permet en outre d'éviter la formation de ponts thermiques au niveau des tranches.

L'utilisation de tels panneaux élémentaires pour réaliser une installation d'isolation thermique est cependant délicate du fait que l'enveloppe barrière (très mince) est fragile. Ce type de panneau ne tolère pas d'efforts de compression ou de flexion qui sont susceptibles d'allonger localement l'enveloppe et de dégrader ses propriétés de barrière aux gaz.

La taille relativement importante des panneaux et leur très faible conductivité thermique sont des atouts de performance d'isolation thermique très importants qui peuvent toutefois être considérablement réduits si l'écartement entre deux panneaux adjacents est trop important (problématique des ponts thermiques) et/ou si de l'air peut circuler au niveau des jonctions (problématique associée d'étanchéité à l'air des isolants thermiques de parois de bâtiments).

Un perçage de l'enveloppe barrière aussi minime soit-il provoque la perte du vide à l'intérieur de l'enveloppe conduisant à une baisse très significative des performances thermiques des panneaux, la conductivité thermique pouvant alors augmenter d'un facteur trois ou quatre, voire au-delà si de la vapeur d'eau pénètre également dans l'enveloppe (de l'ordre de 20 mW m⁻¹ K⁻¹ ou plus au lieu de 5 à 7 mW m⁻¹ K⁻¹ pour un panneau isolant sous vide intact).

On connaît des solutions pour protéger des panneaux PIV, par exemple en utilisant de la mousse (éventuellement renforcée avec de la fibre de verre), du plastique ou des matières composites pour assurer une protection mécanique de ces panneaux élémentaires super-isolants. Ainsi, le document US 5897932 montre des dalles composites qui présentent chacune un panneau PIV et un cadre externe formé de plusieurs éléments. Le cadre protège les bords de l'enveloppe barrière du panneau PIV. Les dalles de ce type peuvent être vissées l'une à l'autre dans une zone de jonction formée, à distance de l'enveloppe barrière. Parmi les inconvénients de ces dalles, on peut noter que les éléments du cadre augmentent l'encombrement et tendent à réduire l'efficacité de l'intégration et de l'isolation thermique (écartement important entre deux panneaux adjacents conduisant à de très importants ponts thermiques). De plus, pour une utilisation dans le bâtiment, il est nécessaire de recouvrir les faces des panneaux PIV, par un parement qui s'ajoute à l'épaisseur du cadre. En pratique, de telles dalles sont essentiellement utilisées sur de petites surfaces, typiquement dans l'enceinte d'un réfrigérateur.

Dans le domaine du bâtiment, on utilise aussi des dispositifs d'appui rigides, associés à des profilés, pour à la fois supporter un parement externe et maintenir les panneaux PIV alignés dans des rangées. Le document WO 2013088077 montre ainsi des panneaux installés en formant des rangées, par exemple entre une lame d'air du côté de la paroi à doubler et une plaque de parement recouvrant plusieurs panneaux isolants. L'ossature requise dans un tel système engendre souvent une surépaisseur.

Certains fabricants proposent aussi des ensembles laminés robustes, avec des couches ou des coques de protection. Le document WO 2013086005 décrit un genre de module pour une doublure murale qui protège le panneau VIP par une coque en deux parties. Les couches additionnelles utilisées dans le module tendent à augmenter significativement son épaisseur et rendent très compliquée toute possibilité d'inspection du panneau VIP.

Plus généralement, les solutions existantes ne permettent pas (ou très difficilement) la vérification de l'intégrité des panneaux PIV lorsque le système a été complètement installé. Or l'intégrité des panneaux isolants (cf. maintien du vide à l'intérieur de l'enveloppe barrière) conditionne le niveau de performance de la couche d'isolation thermique.

Il existe donc un besoin pour un mode de montage d'une cloison isolante qui permet d'intégrer efficacement et de manière simple des panneaux élémentaires de type PIV, sans risque de dégradation par des éléments de fixation (vis) et/ou sans cumuler des couches de protection qui augmentent l'épaisseur globale, notamment pour des applications de contrecloison de grande surface dans un bâtiment (super-isolation thermique de parois opaques), avec une flexibilité et facilitant l'inspection.

La présente invention a notamment pour but de pallier tout ou partie des inconvénients précités.

A cet effet, il est proposé selon l'invention un module composite d'isolation thermique pour doubler une paroi ou définir une cloison, comprenant :
- des moyens de maintien adaptés pour former tout ou partie d'une périphérie latérale du module,
- un couvercle présentant une première extrémité et une deuxième extrémité opposée à la première extrémité,
- un espace intérieur délimité par les moyens de maintien et le couvercle dans une première configuration de fermeture de l'espace intérieur,
- au moins un panneau isolant qui a une forme de plaque et présente deux faces principales et deux tranches opposées qui sont de préférence parallèles, comprenant un matériau poreux résistant à la compression ainsi qu'une enveloppe barrière étanche aux gaz, fermée sous vide, qui renferme le matériau poreux, ledit panneau isolant étant logé dans l'espace intérieur au moins dans la première configuration, de sorte que le couvercle recouvre dans la première configuration tout ou partie d'une face déterminée choisie parmi les deux faces principales ;
sachant que la deuxième extrémité du couvercle est mobile entre la première configuration fermée et une deuxième configuration d'accès à l'espace intérieur, le couvercle étant :
- articulé de façon à alternativement écarter et rapprocher la deuxième extrémité de l'une des deux tranches tout en maintenant tout ou partie de la première extrémité dans une position d'attache aux moyens de maintien (attache typiquement prévue du côté de l'autre des deux tranches, où une charnière peut être formée au niveau de cette première extrémité), et
- adapté pour permettre une inspection de ladite face déterminée du panneau isolant dans la deuxième configuration,
   et sachant que le module composite comprend des moyens de fixation amovible pour réaliser un verrouillage de la première configuration de fermeture qui correspond à un état fermé du module, la mobilité entre la première configuration fermée et une deuxième configuration d'accès à l'espace intérieur est obtenue par déverrouillage des moyens de fixation amovible et l'inspection de la face déterminée du panneau isolant dans la deuxième configuration est permise après chaque déverrouillage.

Ainsi, on comprend qu'on peut détecter (par l'aspect en surface du film formant l'enveloppe barrière) une baisse de performance d'isolation thermique d'un panneau PIV et aisément décider d'un changement si besoin. De préférence, le panneau PIV peut être monté amovible (extractible hors de l'espace intérieur) en constituant un élément remplaçable dans le module composite. Le panneau super isolant de remplacement doit simplement être de mêmes dimensions que le panneau remplacé.

Grâce à ces dispositions, on peut former une doublure de paroi en utilisant de tels modules composites, avec l'avantage de rendre aisée l'inspection des panneaux PIV. L'articulation permet d'ouvrir aisément chaque module dans un état monté à la verticale (avec possibilité de remplacer un panneau PIV défectueux) ou monté dans un plafond en sous-pente ou dans une toiture.

Selon une particularité, le couvercle comporte une partie d'obturation qui s'étend parallèlement à la face déterminée et perpendiculairement à la périphérie latérale du module dans la première configuration. Le couvercle à l'état fermé peut former ou faire partie d'une finition, de sorte que le module offre une solution 2 en 1 (isolation thermique et finition). La surface externe du couvercle est sensiblement plane et rigide avec une finition (surface non brute) formée sur l'ensemble de cette surface externe.

Par ailleurs l'épaisseur d'un module reste compacte tout en bénéficiant d'une couche de protection pour l'enveloppe barrière des panneaux PIV. Le fait de déplacer le couvercle permet aussi de percer de façon sûre la plaque (plaque de finition ou autre genre de plaque de recouvrement) qui recouvre chaque PIV, après la pose du module.

Selon une particularité, les éléments de type PIV sont jointifs sans couche intercalaire entre certaines de leurs tranches dans la couche isolante. Il est ainsi obtenu une solution pouvant protéger et maintenir la performance d'isolation, en limitant les ponts thermique du système, en réduisant les risques de percement des panneaux PIV, et en permettant la vérification de l'intégrité des panneaux PIV.

Selon une particularité, le panneau PIV est pris en sandwich entre une partie de fond et le couvercle qui est fixé de manière amovible le long d'une tranche du panneau PIV et mobile par pivotement. La partie de fond (qui est d'un seul tenant ou constituée des portions espacées entre elles) peut être fixée optionnellement sur des profilés rigides ou éléments structurels équivalents d'une ossature de maintien, ce qui permet de définir une couche d'isolation thermique sensiblement parallèle à la paroi à doubler.

Dans divers modes de réalisation du module composite selon l'invention, on peut éventuellement avoir recours en outre à une ou plusieurs des dispositions suivantes :
- les moyens de maintien comportent des éléments de fixation pour attacher le module à la paroi à doubler, de préférence à distance de la première extrémité et de la deuxième extrémité du couvercle. Des vis ou éléments d'ancrage comparables peuvent ainsi servir à fixer une partie de fond soit directement à la paroi, soit sur des organes d'appui tels que des profilés, tasseaux ou montants de support.
- les moyens de maintien comportent une partie de fond, incluant de préférence une plaque rigide, et un premier élément de bordure, raccordé à un premier côté de la partie de fond et relié à la première extrémité du couvercle, qui s'étend le long de l'une des deux tranches du panneau isolant.
- la plaque rigide formant la partie de fond a une épaisseur préférentiellement comprise entre 2 et 10 mm. Cette plaque peut avoir un rôle de fixation, par exemple en présentant des trous pour le passage de vis ou éléments d'ancrage analogues, ou en étant collée (par exemple du côté de sa face arrière).
- au moins le premier élément de bordure et le couvercle sont formés d'un seul tenant. Le fait d'associer le couvercle et cet élément de bordure, avec de préférence une réalisation en une seule pièce, facilite la mise en place du module. Plus généralement, on comprend qu'après la fixation des moyens de maintien, le couvercle a un degré de liberté réduit, typiquement avec seulement un mouvement de rotation de sorte que la première extrémité du couvercle ne peut pas être significativement déplacée.
- dans un état monté du module pour former une cloison ou une doublure de paroi, la jonction entre la première extrémité du couvercle et le premier élément de bordure coïncide avec l'axe de pivotement qui reste fixe.
- les moyens de maintien comportent en outre un deuxième élément de bordure, raccordé à un deuxième côté de la partie de fond, qui s'étend le long de l'autre des deux tranches du panneau isolant, au moins un volet de retenue (distinct du couvercle) étant relié au deuxième élément de bordure et recouvrant au moins une portion de marge de la face déterminée. La présence de deux éléments de bordure, qui sont typiquement parallèles, peut avantageusement faciliter la mise en place du panneau isolant dans l'espace intérieur.
- l'épaisseur du premier élément de bordure ou l'épaisseur cumulée des deux éléments de bordure peut être inférieure à 5 ou 6 mm.
- l'un au moins parmi le deuxième élément de bordure et ledit volet de retenue présente un organe de fixation pour maintenir le couvercle dans la première configuration.
- les deux tranches opposées du panneau isolant sont parallèles et la deuxième extrémité s'étend le long d'une de ces deux tranches du panneau isolant dans la première configuration.
- le panneau isolant a un format de panneau parallélépipédique.
- le premier élément de bordure et le deuxième élément de bordure sont parallèles et forment des éléments minces, de préférence en carton, l'un au moins parmi la partie de fond et le couvercle incluant une couche plus épaisse que les éléments minces, en particulier une plaque de plâtre.
- le couvercle est articulé du côté de la première extrémité, par une ligne de pliage dont la longueur est de préférence égale à une dimension du module (ou égale à une dimension du couvercle, notamment lorsque le panneau a une dimension plus courte ou plus longue, mesurée suivant la direction de cette ligne de pliage).
- Le module composite comprend des moyens de fixation amovible pour réaliser un verrouillage de la première configuration de fermeture qui correspond à un état fermé du module. La mobilité entre la première configuration fermée et une deuxième configuration d'accès à l'espace intérieur est obtenue par déverrouillage des moyens de fixation amovible. L'inspection de la face déterminée du panneau isolant dans la deuxième configuration est permise après chaque déverrouillage.
- Le panneau isolant a un format parallélépipédique, tandis que les moyens de maintien et la partie de couvercle définissent un caisson.

Selon une particularité, le couvercle s'étend entre les deux tranches opposées et est fixé de manière amovible aux moyens de maintien par au moins un élément d'attache choisi parmi :
- une languette mâle conçue pour s'insérer dans une fente correspondante prévue dans les moyens de maintien,
- une bande qui présente des organes de prise de type boucles et/ou crochets,
- une couche adhésive repositionnable (par exemple à base de silicone),
- un organe magnétique qui coopère dans la configuration de fermeture par attraction magnétique avec un organe magnétique correspondant prévu dans les moyens de maintien. Ce mode de fixation est simple d'utilisation et permet de fermer le couvercle à de multiples reprises sans dégrader l'aspect de la finition.

Dans une variante ou en complément, le couvercle comporte un bord biseauté du côté opposé à une charnière ou une ligne de pliage définissant un axe de pivotement du couvercle. Ce bord biseauté peut venir s'engager avec complémentarité de forme sur une surface inclinée d'un module adjacent, près de l'axe de pivotement de ce module adjacent. Dans une telle configuration, le premier élément de bordure peut être coudé pour définir la surface inclinée (par exemple dans une portion de retenue similaire à un volet, qui recouvre une étroite portion de marge de la face déterminée). L'axe de pivotement est ainsi décalé par rapport à la tranche de panneau recouverte par le premier élément de bordure.

On prévoit aussi selon l'invention d'utiliser des modules composites sous forme de rangées pour une application d'isolation thermique en alignant bout à bout une pluralité de modules. Plus particulièrement, on utilise les modules composites d'isolation thermique selon l'invention pour doubler une paroi de bâtiment ou définir une cloison de bâtiment, en choisissant des modules composites de même largeur pour former une rangée, sachant qu'on commence par installer un premier module composite pourvu d'un premier couvercle articulé qui définit une extrémité inférieure de la rangée puis on positionne un deuxième module composite pourvu d'un deuxième couvercle articulé, de façon à mettre en contact bout à bout deux panneaux isolants adjacents. L'un de ces deux panneaux est recouvert par le premier couvercle et l'autre est recouvert par le deuxième couvercle, de sorte que le premier couvercle et le deuxième couvercle font partie d'une même couche externe sensiblement plane de la rangée.

Dans un mode de réalisation, un panneau isolant, de type PIV, dépasse ou est en retrait par rapport au couvercle et/ou à une partie de fond. On peut de cette manière, au sein d'une même rangée de modules, insérer un bout saillant d'un panneau d'un premier module dans une portion de l'espace intérieur creux formé par un deuxième module adjacent.

On comprend qu'il est aisé de former une couche à base de panneaux PIV (en association avec des éléments de bordure des moyens de maintien) qui est non seulement simple à assembler *in situ*, mais aussi qui présente une continuité d'isolation thermique dans des rangées. Sur une paroi plane à isoler par l'intérieur, il est simple d'accoler directement les panneaux PIV contre la surface de paroi en délimitant leur position par un ou plusieurs éléments de bordure (pourvus par exemple de volet(s) de retenue). Il est également aisé de joindre bout à bout, par des côtés parallèles, les modules de deux rangées adjacentes et ainsi définir une continuité dans l'étanchéité à l'air, en réduisant toute circulation d'air entre les faces avant et arrière des modules.

Lorsque la paroi à doubler présente des zones irrégulières susceptibles de percer l'enveloppe barrière de l'élément isolant, il reste possible d'accoler les modules contre ou au plus près de cette paroi, grâce à la partie de fond. Les modules composites, de même épaisseur, sont simples à assembler pour définir un système d'aspect continu. L'unique couche de recouvrement, qui définit la face extérieure du système peut être formée simplement par les couvercles qui sont alignés selon des rangées dans leur configuration de fermeture.

L'invention concerne également un procédé d'assemblage utilisant un couvercle, typiquement opaque, et au moins un panneau thermiquement isolant de type PIV pour former un module composite destiné à doubler une paroi de bâtiment ou définir une cloison de bâtiment, le panneau ayant une enveloppe barrière étanche aux gaz conformée pour définir deux faces principales et quatre tranches du panneau, le procédé comprenant les étapes consistant essentiellement à :
- placer le panneau thermiquement isolant dans un espace intérieur défini à l'arrière d'un couvercle articulé, le couvercle étant articulé par rapport à au moins un élément de bordure qui délimite partiellement l'espace intérieur, une des tranches du panneau étant maintenue contre cet élément de bordure, parallèlement à un axe de pivotement du couvercle,
- rabattre le couvercle par rotation autour de l'axe de pivotement et verrouiller par un mode de fixation amovible un état fermé du module dans lequel le couvercle s'étend parallèlement à une face déterminée choisie parmi les deux faces principales, de façon à recouvrir et ne plus rendre visible cette face déterminée,
sachant que le mode de fixation amovible permet d'écarter une extrémité du couvercle à distance de l'espace intérieur par rotation autour de l'axe de pivotement. On peut ainsi obtenir un état ouvert du module qui permet une inspection de la face déterminée du panneau, même après la fin de l'installation d'un tel module dans un système complet d'isolation thermique doublant ou constituant une paroi de bâtiment.

Le procédé permet avantageusement de vérifier en oeuvre l'intégrité des panneaux PIV formant une sous-couche isolante très performante. Le couvercle peut être déplacé pour intervenir sur celui-ci, tout en inspectant la face du panneau. Il est possible d'introduire depuis l'arrière un accessoire de fixation traversant le couvercle (avec dans ce cas une extrémité par exemple plane du côté du panneau pour ne pas engendrer de dégradation de l'enveloppe lors de la fermeture du couvercle).

On facilite également le phasage des chantiers en minimisant les risques de dégradation des panneaux PIV, notamment en limitant l'usage d'outils pendant et après l'installation des panneaux PIV.

Dans le cas d'un doublage d'une paroi plane, l'espace intérieur peut être délimité du côté arrière directement par la paroi à doubler (paroi plane sans aspérités significatives susceptible de détériorer la mince enveloppe barrière du panneau PIV), après avoir bordé au moins en partie cet espace intérieur par le ou les éléments de bordure, par exemple directement fixés à une paroi verticale ou autre substrat d'un bâtiment. Alternativement, on peut utiliser une paroi du bâtiment perpendiculaire pour délimiter une bordure d'une première rangée de modules, puis utiliser les modules déjà placés comme repères pour le positionnement direct des panneaux PIV qui appartiennent à une deuxième rangée adjacente, par exemple en les collant contre la paroi à isoler.

Selon une particularité, le panneau isolant définit une zone de vide qui est séparée du ou des éléments de bordure uniquement par un film qui constitue l'enveloppe barrière.

D'autres caractéristiques et avantages de l'invention apparaîtront au cours de la description suivante de plusieurs de ses modes de réalisation, donnés à titre d'exemples non limitatifs, en regard des dessins joints dans lesquels :
- la figure 1 est une vue en perspective illustrant une forme de réalisation préférée d'un module composite qui intègre un panneau de type PIV ;
- la figure 2 montre un détail de la figure 1 ;
- la figure 3 est une vue en perspective similaire à celle de la figure 1 pour illustrer un état fermé du module composite qui protège le panneau de type PIV ;
- la figure 4 illustre schématiquement une succession d'étapes permettant de solidariser à la paroi un module composite pouvant former le bas d'une rangée verticale de modules ;
- la figure 5 est une vue en coupe horizontale illustrant un exemple d'assemblage entre deux modules adjacents d'une même rangée verticale de modules;
- la figure 6 est une vue en en coupe horizontale illustrant une position d'ouverture initiale d'un module utilisé dans l'assemblage de la figure 5 ;
- la figure 7A illustre un mode d'installation utilisant des profilés pour caler un module composite d'un genre similaire à ceux montrés sur les figures 5 et 6, dont le panneau PIV présente un excès de longueur par rapport au reste du module ;
- la figure 7B est similaire à la figure 7A et illustre un cas de superposition entre le module composite intégrant le panneau PIV et un élément percé qui est soit découpé dans un autre genre d'isolant, soit pourvu d'un orifice prévu dès sa conception ;
- la figure 8 représente une forme de réalisation particulière d'un système d'isolation par doublage d'une paroi d'un bâtiment, utilisant les modules composites, en cours d'installation ;
- la figure 9 illustre une variante de réalisation de l'invention, utilisant au moins un profilé vertical dans la jonction entre deux modules de rangées adjacentes.

Sur les différentes figures, les mêmes références désignent des éléments identiques ou similaires.

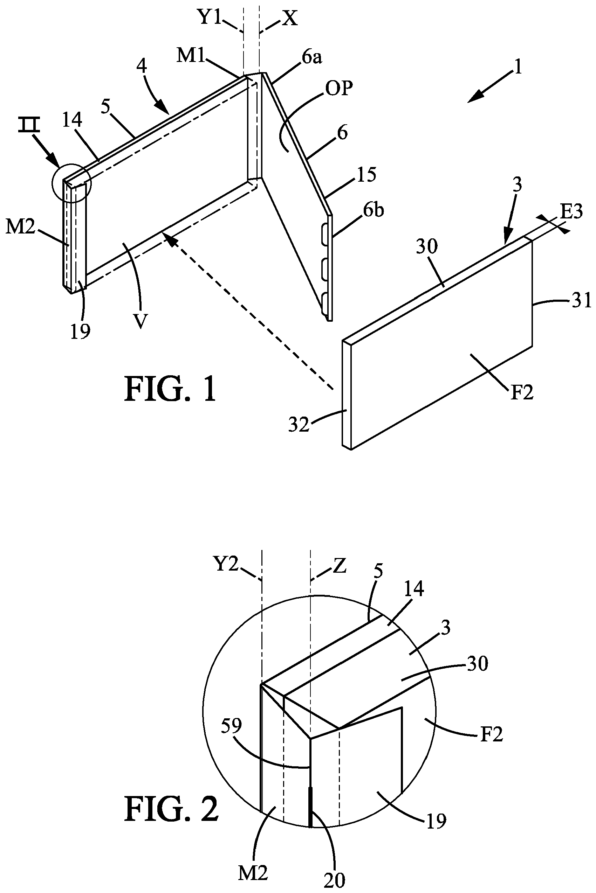

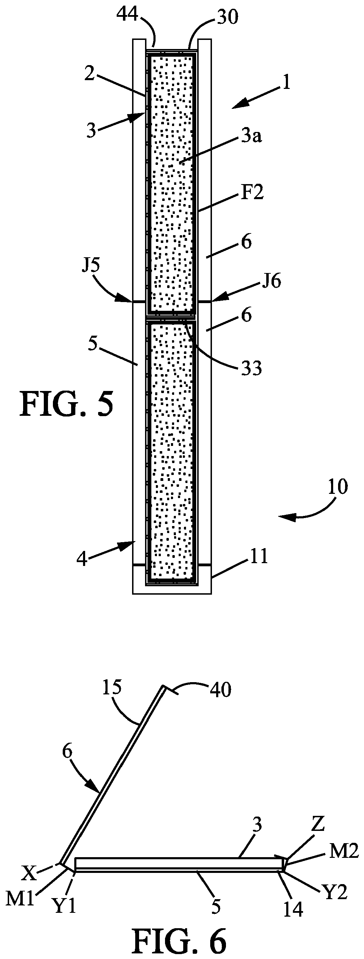

En référence aux figures 1 et 5, le module composite 1 d'isolation thermique comporte au moins un panneau 3 de type PIV (de format typiquement standard), ici sans protection mécanique associée, ayant un format parallélépipédique avec la même épaisseur E3 (cette épaisseur étant typiquement la plus petite des dimensions des panneaux 3). Le panneau 3 a donc une forme de plaque et présente deux faces principales F1 et F2 et deux tranches opposées 31, 32 qui sont de préférence parallèles. Le matériau poreux 3a présent à l'intérieur de l'enveloppe barrière 2 est résistant à la compression (il est typiquement rigide, contrairement au film souple formant l'enveloppe barrière 2). Le matériau poreux 3a est enfermé sous vide par l'enveloppe barrière étanche aux gaz. L'enveloppe barrière 2 se rétracte sur ce matériau poreux lorsque celle-ci est soumise extérieurement à la pression atmosphérique. En cas de perçage de l'enveloppe barrière 2, l'aspect de la surface qui correspond normalement à un état rétracté peut être modifié. Une telle modification est typiquement visible à l'oeil nu.

On comprend que le matériau poreux 3a définit de préférence au moins 90% de l'épaisseur totale E3 du panneau 3 de type PIV, sachant que l'enveloppe barrière 2 est constituée d'un film étanche très mince (généralement multicouche) dont l'épaisseur est très inférieure à 1 mm, et typiquement inférieure à 0,2 mm.

Le module 1 définit dans cet exemple une enveloppe 4 qui recouvre au moins partiellement les deux faces principales opposées F1, F2 du panneau 3, dont l'épaisseur E3 est typiquement inférieure ou égale à 35 ou 40 mm. L'enveloppe 4 délimite - ici par une partie de fond 5, un couvercle 6 et au moins deux éléments de bordure M1, M2 - un espace intérieur V pour loger un ou plusieurs panneaux 3.

En référence aux figures 1, 3 et 8, il peut être avantageux que l'enveloppe 4 ne borde pas une ou plusieurs extrémités de l'espace intérieur V, ce qui permet d'exposer une ou plusieurs tranches 30 du panneau 3 qui peuvent s'accoler respectivement contre une tranche d'un panneau 3 adjacent lors de l'installation d'un système d'isolation 10.

On illustre ici seulement le cas où l'épaisseur enveloppée est définie par l'épaisseur E3 d'un panneau 3. Toutefois, il est bien entendu permis de former au moins deux couches de panneaux 3 (à titre d'exemple non limitatif deux panneaux de 20 ou 25 mm d'épaisseur chacun peuvent être utilisés pour remplir au moins en partie l'espace intérieur V). Cependant l'épaisseur totale E1 du module composite 1 est de préférence très inférieure à 100 mm afin de minimiser l'encombrement, par exemple inférieure à 80 mm, et de préférence inférieure ou égale à 60 ou 65 mm. Une épaisseur E1 inférieure à 50 mm est plus particulièrement intéressante, et ce faible niveau d'épaisseur peut être aisément atteint pour des applications de doublage d'une paroi P de bâtiment qui est plane. Dans ce cas, on peut éventuellement supprimer la partie de fond 5 et fixer directement à la paroi P des moyens de maintien qui supportent le couvercle 6. De tels moyens de maintien forment tout ou partie d'une périphérie latérale du module composite 1.

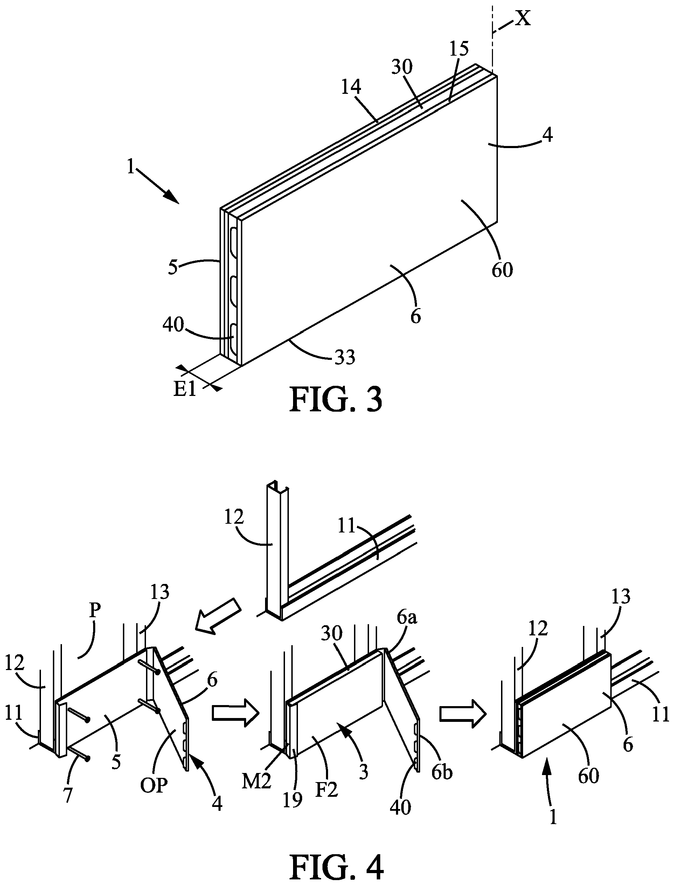

Dans un premier mode de réalisation, comme illustré sur les figures 1 à 3, le module 1 comporte l'enveloppe 4 qui est d'un seul tenant et qui rassemble :
- le couvercle 6 qui est sensiblement plan et définit une face externe du module 1 ;
- des moyens de maintien qui comportent la partie de fond 5 et au moins un premier élément de bordure M1 qui recouvre une première tranche 31 du panneau 3 dans un état fermé du module 1 (état fermé illustré sur la figure 3), et optionnellement un deuxième élément de bordure M2, parallèle au premier élément de bordure M1 et qui recouvre une deuxième tranche 32 opposée à la première tranche 31.

Comme bien visible sur les figures 1 et 4, l'enveloppe 4 est réalisée d'un seul tenant, ce qui facilite la pose par vissage ou par un quelconque mode adapté de fixation. Les moyens de maintien M1, M2, 5 correspondent à une partie complémentaire du couvercle 6, et peuvent être non visibles à l'état fermé et monté du module composite 1 lorsque le couvercle 6 définit la totalité de la surface externe visible 60 du module 1.

La figure 3 illustre l'état fermé du module 1, avec le couvercle 6 de l'enveloppe 4 qui permet de cacher la face déterminée F2 formée du côté extérieur du panneau 3 lorsque celui-ci est logé dans l'espace intérieur V. Il s'agit ici d'une première configuration du couvercle 6, dans laquelle le couvercle 6 recouvre tout ou partie de la face déterminée F2 (le couvercle 6 peut être typiquement en contact direct avec la face F2 pour minimiser l'épaisseur E1). Bien que les figures 1 et 3 montrent une partie d'obturation OP du couvercle 6 qui coïncide avec les dimensions de la face déterminée F2, on peut prévoir d'autres configurations, par exemple avec une partie d'obturation OP mobile de plus petite taille que la face déterminée F2.

Le couvercle 6 est préférentiellement articulé sur une extrémité latérale du module 1, en pouvant tourner d'environ 90° au moins autour d'un axe de pivotement X qui s'étend parallèlement aux deux tranches 31 et 32. Dans la première configuration du couvercle 6, au moins la partie d'obturation s'étend parallèlement à la face déterminée F2, parallèlement à la partie de fond 5 et perpendiculairement à la périphérie latérale du module 1. Ceci permet à l'enveloppe 4 de s'ajuster le long des faces du panneau 3 dont le format est parallélépipédique. Un format de caisson peut éventuellement être défini, même si on préfère laisser des tranches du panneau 3 accessibles, par exemple la tranche supérieure 30 et la tranche inférieure 33.

Les éléments de bordure M1 et M2 de l'enveloppe 4 peuvent résulter d'un pliage d'une feuille de carton ou d'un matériau pliable analogue qui est mince, suffisamment rigide et peu conducteur thermique.

Il a été constaté qu'une conductivité trop élevée et un écartement trop important entre deux panneaux 3 adjacents de type PIV étaient deux causes majeures de dégradation de la performance d'isolation. C'est pourquoi il s'avère important d'utiliser un matériau ayant une conductivité thermique faible inférieure ou égale à 0,6 W m⁻¹ K⁻¹, et de préférence inférieure à 0,1 ou 0,2 W m⁻¹ K⁻¹. Le carton présente une conductivité thermique de l'ordre de 0,07 W m⁻¹ K⁻¹ et présente un surcroît d'épaisseur faible. A la jonction entre les tranches des panneaux 3 dans la couche isolante, un écart de l'ordre de 3-4 mm reste intéressant à condition d'utiliser un matériau pour les éléments de bordure M1, M2 ou M1' qui présente une conductivité thermique particulièrement faible, de préférence inférieure ou égale à 0,10 ou 0,07 W m⁻¹ K⁻¹. Le matériau est dans ce cas considéré comme thermiquement très isolant.

L'utilisation d'une pièce en carton pour former l'enveloppe 4 est donc avantageuse pour limiter les ponts thermiques du fait de la faible épaisseur entre les tranches 31, 32 des panneaux 3. Or il a été constaté une dégradation assez brutale de la performance de la couche de panneaux 3 lorsque cet écart atteint quelques mm. Dans ce cas, un transfert de chaleur par conduction se réalise de façon importante au niveau des jonctions entre les rangées et le bénéfice du super isolant dans les panneaux 3 est très dégradé, sauf à utiliser dans les jonctions une matière ayant une conductivité thermique s'approchant au mieux de celle des panneaux 3 de type PIV. Aussi, on comprend qu'il est préférable que l'écart entre les panneaux 3 (de couches adjacentes) soit réduit à moins de 3 ou 4 mm.

La pièce en matériau pliable peut être complétée par une couche 14 de rigidification du côté arrière du module 1, de façon à obtenir une partie de fond 5 rigide. La couche 14, ici combinée avec du carton, peut consister en un matériau robuste ayant un impact minimal sur le coût global de la solution (exemple : polymère alvéolé ou plaque de plâtre). La pièce monobloc de matériau pliable peut délimiter à elle seule l'espace intérieur V, la couche 14 étant formée extérieurement par exemple pour définir une face externe arrière du module composite 1.

Du côté accessible ou côté avant où est formé le couvercle 6, on peut rendre le matériau pliable solidaire d'une plaque 15 ayant une surface extérieure de finition. Dans les exemples illustrés, la plupart ou la totalité des couvercles 6 peut présenter une même finition. Les couvercles 6 sont rigides et formés par exemple à partir d'au moins un parmi les matériaux suivants pour former la plaque 15 extérieure :
- mélaminé,
- céramique
- verre (opaque ou translucide),
- bois,
- revêtement plastique,
- brique,
- pierre.

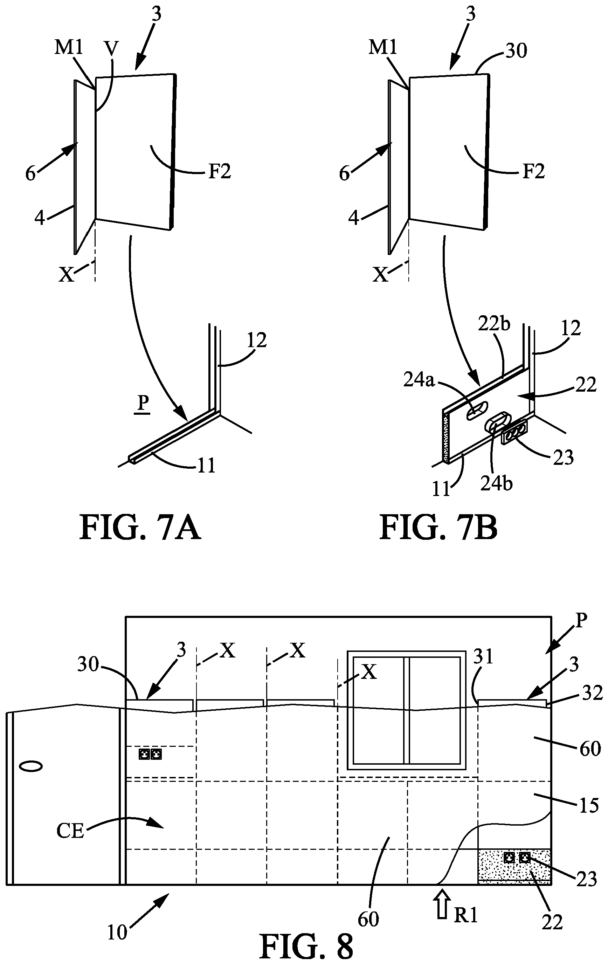

Comme visible sur la figure 8, la face externe commune du système d'isolation 10 définit une finition, formée par les couvercles 6 respectifs des modules composites 1. On peut optionnellement choisir d'articuler ces couvercles 6 sur des axes de pivotement X placés du même côté (par exemple à gauche de chaque module 1 dans le cas de la figure 8). On comprend que chaque couvercle 6 présente une première extrémité 6a qui peut être maintenue dans une position d'attache aux moyens de maintien (M1, M2, 5), ici du côté de la tranche 31.

Le panneau 3 placé à l'arrière du couvercle 6 articulé peut être inspecté grâce au mode de fixation amovible d'une deuxième extrémité 6b du couvercle 6. Le module composite 1 peut donc être dans un état fermé à l'issue de l'installation, tout en permettant l'accès à l'espace intérieur V pour visualiser la face déterminée F2. Pour cela, on pivote la partie d'obturation OP formée par le couvercle 6 après avoir déverrouillée la configuration de fermeture.

Comme illustré sur les figures 1 à 3, on peut prévoir une pièce en carton qui s'étend au moins du côté du couvercle 6 et de l'élément de bordure M1, où peut être formée la ligne de pliage définissant l'axe de pivotement X. L'élément de bordure M1 peut présenter des dimensions identiques à celles de la tranche 31 du panneau 3 qu'il recouvre et être formé seulement par un panneau latéral étroit appartenant à la pièce en carton. L'élément de bordure M1 peut être délimité entre un côté long avant coïncidant avec la ligne de pliage formant l'axe X et un côté long arrière qui correspond aussi à une ligne de pliage. Un axe de rotation Y1 peut ainsi être formé parallèlement à l'axe de pivotement X, comme bien visible sur la figure 1.

Dans l'état fermé et installé des modules 1, le couvercle 6 peut être déplacé uniquement par rotation autour de l'axe de pivotement X. Dans cet exemple, l'axe de pivotement X se situe le long de la tranche 31, ce qui permet d'inspecter la face déterminée F2 jusqu'à l'une au moins de ses extrémités latérales. Dans une variante de réalisation, l'axe de pivotement X peut être placé dans une position intermédiaire entre les éléments de bordure M1 et M2 et le couvercle 6 peut présenter un format réduit par rapport aux dimensions de la face déterminée F2.

En référence aux figures 1, 2 et 6, on peut voir que le deuxième élément de bordure M2 est raccordé par l'arrière à un deuxième côté de la partie de fond 5, en formant une ligne de pliage. L'axe de rotation Y2 qui correspond à cette ligne de pliage permet d'écarter initialement l'élément de bordure M2, ce qui facilite l'insertion du panneau 3 avant de l'envelopper avec un maintien (ici au moins latéral) dans l'espace intérieur V.

L'élément de bordure M2 peut présenter des dimensions identiques à celles de la tranche 32 du panneau 3 qu'il recouvre et être formé seulement par un panneau latéral étroit appartenant à la pièce en carton. Du côté avant, l'élément de bordure M2 est relié à un ou plusieurs volets de retenue 19. Dans cet exemple, il présente à la jonction 59 avec le volet de retenue 19 une ligne de pliage pour former un autre axe Z2 parallèle à l'axe de rotation Y2, comme bien visible sur la figure 2. Le volet de retenue 19 est ainsi replié sur la face déterminée F2 du panneau et il est permis de former une ou plusieurs fentes 20 dans la jonction 59 qui participent à la fixation amovible du couvercle 6.

Du côté de la deuxième extrémité 6b du couvercle 6, on prévoit par exemple une ou plusieurs languettes 40, ici intégralement formées avec la pièce de carton, et adaptées pour s'insérer dans les fentes 20, en longeant la tranche 32 du panneau, comme illustré sur la figure 3. Ce mode de fixation n'a aucun impact sur l'aspect externe du couvercle 6, ce qui permet de réaliser une finition sur la plaque 15 qui recouvre extérieurement la pièce en carton, dans une forme de réalisation préférée.

Il est également aisé de déverrouiller l'état de fermeture du module composite 1, puisqu'il suffit de tirer sur la deuxième extrémité 6b du couvercle 6 pour retirer les languettes 40 hors des fentes 20. Le mode de fixation amovible permet d'écarter la deuxième extrémité 6b distance de l'espace intérieur V par simple rotation autour de l'axe de pivotement X, ce grâce à quoi on obtient un état ouvert du module 1 qui rend possible une inspection directe de la face déterminée F2 du panneau 3. Il est permis aussi de réaliser des perçages du couvercle 6 sans dégrader le panneau 3 lorsqu'on maintient le couvercle 6 écarté de l'espace intérieur V où est logé le panneau 3.

En cas d'aspect anormal de la surface de l'enveloppe barrière 2, représentatif de la perte du vide à l'intérieur du panneau isolant, on peut aisément remplacer le panneau 3, de préférence par au moins un panneau intègre équivalent dans ses dimensions et assurant une performance d'isolation thermique digne d'un PIV.

Sur la figure 4 qui illustre un exemple d'installation du module composite 1, on voit que la partie de fond 5 peut jouer un rôle de fixation, soit directement sur la paroi P à doubler, soit sur des éléments structurels 11, 12, 13 en appui sur cette paroi P. La partie de fond 5 peut donc inclure des perçages et être traversée par des éléments d'ancrage, ici des vis 7, sans que cela ne génère de risque de détérioration pour la face principale arrière du panneau 3.

Dans cet exemple, on installe le premier module d'une rangée verticale sur une combinaison d'au moins un profilé horizontal 11, ici à section en U, et d'un ou plusieurs profilés 12, 13 verticaux à section en U ou en H. Ceci permet d'obtenir une planéité des surfaces extérieures 60 des modules 1, malgré une paroi P à doubler qui est irrégulière. L'ossature, constituée essentiellement par les profilés 11, 12 et 13, est préalablement positionnée sur le mur ou autre substrat du bâtiment à isoler. Dans une variante on peut aussi fixer à la paroi P uniquement des profilés parallèles entre eux pour former l'ossature.

L'utilisation d'une enveloppe 4 dont le ou les éléments de bordure M1, M2 peuvent s'écarter de l'espace intérieur V puis s'ajuster le long des tranches 31 et 32 simplifie l'obtention de l'état fermé du module composite 1.

L'utilisation d'entretoises, typiquement jusqu'à 50 mm dans le sens de l'épaisseur du système d'isolation 10, permet optionnellement de corriger l'aplomb ou les défauts de planéité du mur. On choisit par exemple des dimensions habituelles et des matériaux disponibles en grande diffusion pour réduire le coût de l'ossature. Les profilés 11, 12, 13 ou autres éléments structurels qui jouent le rôle d'entretoises entre la face arrière des modules 1 et la paroi P peuvent être peu conducteurs thermiquement (exemples : isolant rigide, plastique, PVC).

En référence à présent aux figures 7A et 7B, on peut voir une variante dans laquelle l'espace intérieur V est ouvert sur un côté opposé à l'axe de pivotement X du couvercle 6. Il n'y a donc pas de rabat à l'opposé de l'articulation du couvercle 6, ce qui peut aussi permettre de limiter l'écartement entre deux tranches 31, 32 appartenant à deux panneaux distincts 3 adjacents dans un système d'isolation 10.

Un dispositif d'emboîtement peut optionnellement être utilisé pour assurer un maintien (par exemple un maintien vertical) du panneau 3 pendant la mise en place des moyens de maintien (M1, 5), le temps de replier l'enveloppe 4 par pivotement du couvercle 6. Lorsque la paroi P à doubler est dépourvue d'aspérité significative (pas de risque de percer l'enveloppe barrière 2), on peut directement placer le module 1 dans un logement creux défini par un profilé 11 horizontal.

Dans l'exemple non limitatif de la figure 7A, le panneau 3 seul peut être d'abord inséré dans le logement creux. Il s'agit ici de la pose d'un premier module d'une rangée verticale R1 (voir figure 8). Le cas échéant, on insère aussi le panneau 3 puis l'enveloppe 4 dans la cavité d'un profilé 12 vertical à section en U (par exemple du côté d'un angle). A l'état replié autour du panneau 3, l'enveloppe 4 peut être également insérée dans le ou les profilés 11, 12 ou éléments structurels analogues.

De préférence, les profilés 11 et 12 pour le support des modules 1 peuvent être formés d'un seul bloc en matière plastique peu conductrice, par exemple en polyamide, en PVC, résine de polyuréthane ou encore à base de matériaux composites, de fibres de verre, éventuellement avec des particules métalliques (par exemple polyamide PA 66 chargé à 25% de fibres de verre).

Chacun des profilés 11, 12 utilisés aux extrémités du système d'isolation 10 de support 10 peut présenter une conductivité thermique inférieure ou égale à 0,6 W m⁻¹ K⁻¹ et de préférence inférieure à 0,2 ou 0,25 W m⁻¹ K⁻¹.

La figure 7B illustre un cas similaire pour la pose du module composite 1, avec la particularité qu'on utilise une fente 22a optionnelle formée dans un élément 22 d'isolation qui se distingue ici des modules composites 1 en ce qu'il ne présente pas d'enveloppe barrière 2 fermée sous vide. Il est alors permis de percer cet élément 22 pour intégrer des prises 23 ou boîtiers de prises électriques, d'antenne ou de réseau informatique. Le ou les trous 24a, 24b sont ainsi faits en dehors des panneaux 3 de type PIV, sans engendrer de ponts thermiques à la jonction entre deux panneaux 3 adjacents.

Ainsi le module composite 1 montré en haut de la figure 7B peut se superposer à l'élément 22 (qui le cas échéant peut être percé et/ou découpé in situ). Comme dans le cas de la figure 7A, on peut prévoir d'insérer une extrémité inférieure du panneau 3 dans la fente 22a avant de replier l'enveloppe 4 par pivotement du couvercle 6.

L'élément 22 est par exemple réalisé dans un autre genre d'isolant, par exemple du polyuréthane, et peut présenter lui aussi une couche extérieure rigide, de préférence pourvue d'un revêtement de finition. Cette couche extérieure peut être similaire ou identique à la plaque extérieure 15.

Comme illustré sur la figure 8, on peut intégrer dans le système d'isolation 10 des éléments 22 d'isolation thermique qui assurent une fonction complémentaire. Il est aussi permis de doter ces éléments 22 de dispositifs lumineux et/ou de dispositifs chauffants (par exemple par effet Joule). Dans ce dernier cas, une attention particulière est apportée aux températures de surface ne devant pas être dépassées (40°C) pour ne pas remettre en cause la pérennité du panneau 3 de type PIV placé dans les modules composites 1 adjacents à l'élément d'isolation 22. Dans une variante, on peut aussi utiliser un panneau PIV spécialement pourvu d'un passage traversant défini au moment de sa conception.

Le ou les éléments 22 qui incluent un isolant traditionnel (plastique alvéolaire performant ou similaire) permettent ici un passage de fluides et/ou de canaux d'alimentation en énergie ou de communication utilisés dans le bâtiment. De plus, ce genre d'élément 22 d'isolation peut servir à compléter le calepinage du mur ou substrat de bâtiment à isoler.

Dans le cas de la figure 8, on a recours à une astuce d'emboîtement liée à la dimension des panneaux 3, qui font ici saillie vers le haut par rapport à un bord supérieur de l'enveloppe 4. La tranche supérieure 30 est alors visible et permet de caler la partie de fond 5 avant son éventuelle fixation directe ou indirecte sur la paroi P.

Alternativement, comme illustré sur la figure 5, on peut ajuster les panneaux 3 de façon à définir une fente supérieure 44 le long de la tranche supérieure 30. Pour cela, on prévoit par exemple des profilés 11 inférieurs allongés à section en U qui reçoivent dans leur cavité le panneau 3 du premier module 1 mais pas la partie de fond 5 ni le couvercle 6. Le panneau 3, malgré sa hauteur ici identique à celle de l'enveloppe 4, est alors en retrait par rapport aux jonctions respectives J5 et J6 horizontales entre les parties de fond 5 et les couvercles 6 superposés au sein d'une même rangée. Dans une variante, la hauteur des panneaux 3 peut être réduite et on peut éventuellement se passer du profilé inférieur 11.

En référence aux figures 5 et 8, on comprend que les moyens de maintien (M1, M2, 5) peuvent suffire pour former une ossature du système d'isolation 10, le cas échéant avec l'apport de profilés 11, 12 situés aux extrémités d'un assemblage de modules composites 1 recouvrant une même paroi P. Les panneaux 3 peuvent être aisément répartis dans une couche qui rassemble plusieurs rangées de panneaux 3 de même largeur (au moins dans une même rangée). Cette couche présente une face avant définie par les faces déterminées F2 (face F2 bien visible sur les figures 4 et 5) et une face arrière opposée à la face avant.

En référence aux figures 1, 5 et 8, les modules composites 1 peuvent être installés de la façon suivante pour isoler thermiquement une paroi P d'un bâtiment.

Optionnellement, on peut commencer par réaliser un traitement de l'étanchéité à l'air de la paroi P à isoler. Ensuite, on commence une étape de fixation directe ou indirecte des moyens de maintien qui permettent de définir l'axe de pivotement X. Pour cela, on peut :
- soit fixer directement sur une même surface de la paroi P (ou dans une paroi adjacente) la partie de fond 5 et/ou le premier élément de bordure M1 ;
- soit fixer d'abord sur la paroi P (ou dans une paroi adjacente) un élément de bordure Ml' initialement séparé du couvercle 6, par exemple sous la forme d'une baguette ou tasseau adapté pour supporter l'articulation ;
- soit fixer les moyens de maintien (plaque de fixation formant la partie de fond 5, profilés ou éléments de bordure M1, M2) à une ossature, par exemple constituée de profilés 11, 12, 13, permettant de corriger la planéité et/ou l'aplomb de la paroi P à isoler.

Ensuite, on peut optionnellement avoir recours à une étape d'encollage des panneaux 3 de type PIV (et éventuellement des éventuels autres éléments 22 isolants), de préférence par utilisation d'une colle sans solvant, suivie d'une étape de collage de ces panneaux 3 sur la paroi P ou sur la plaque formant la partie de fond 5 (dans ce dernier cas, on préfère utiliser un collage de type repositionnable, qui n'empêche pas de retirer sélectivement le panneau 3 plus tard en cas de rupture du vide). En variante, on évite cette étape, par exemple en ayant recours à une astuce d'emboîtement qui tend à plaquer le panneau 3 vers l'arrière. Cela peut être le cas avec un profilé inférieur 11 à section en U dont la cavité est ajustée à la tranche inférieure 33 et joue un rôle de serrage contre le bas de la face déterminée F2 du panneau 3 venant d'être installé dans le profilé inférieur 11, comme illustré sur la figure 5.

La superposition des panneaux 3 au sein des modules composites respectifs 1 se fait en choisissant des modules de même largeur pour former une rangée R1. On commence typiquement par installer au bas de la rangée R1 un premier module composite 1 pourvu d'un premier couvercle 6 articulé. On définit ainsi une extrémité inférieure de la rangée R1. Avant de réaliser la superposition, on peut aussi positionner les modules 1 voisins pour réaliser un alignement horizontal de modules composites 1 et optionnellement d'éléments 22 d'un autre genre qui présentent une même hauteur.

En installant les panneaux 3, il peut être opportun de poser un adhésif, par exemple sous forme de bande, au niveau des jonctions horizontales entre les tranches 30 et 33, ici en contact l'une avec l'autre, pour assurer l'étanchéité à l'air entre les panneaux 3 de type PIV (et autres panneaux isolants le cas échéant qui sont mis bout à bout dans une même rangée R1). Une bande adhésive d'un genre connu pour l'homme du métier peut ainsi servir à recouvrir la jonction (recouvrement au moins du côté des faces F2). Ceci peut permettre de consolider le contact étanche direct entre les tranches latérales des panneaux 3.

Dans une forme de réalisation préférée, les couvercles 6 sont déjà présents et ils peuvent être positionnés dans leur configuration de fermeture par rotation autour de leur axe de pivotement X et en attachant de façon amovible la deuxième extrémité 6b à la périphérie latérale du module 1.

En variante, on peut prévoir au moins un couvercle 6 qui est rendu solidaire du reste du module 1 après la mise en place du panneau 3, en étant mobile à l'aide d'une liaison articulée pour permettre l'inspection de la face F2.

Lors de la fermeture de chaque couvercle 6, les faces extérieures, typiquement pourvues d'une finition pour former les surfaces 60, viennent s'aligner entre elles. La couche des panneaux 3 de type PIV (et autres éléments 22 isolants le cas échéant) peut être alors totalement cachée. Les couvercles 6 respectifs font ainsi partie d'une même couche externe CE (couche de recouvrement), bien visible sur la figure 8, qui est sensiblement plane.

En référence à la figure 8, le système 10 d'isolation thermique obtenu par assemblage de modules composites 1 est particulièrement bien adapté pour doubler une paroi P d'un bâtiment. La paroi P à revêtir peut être de toute nature, par exemple formée de briques ou parpaings jointoyés, le cas échéant recouverte d'un enduit. Ici, les panneaux isolants 3 sont agencés en six rangées. Les modules 1 au bas du système 10 peuvent optionnellement être posés directement sur le sol. Alternativement, il est prévu au moins un profilé de support 11 du genre illustré sur la figure 4 ou sur la figure 5 raccordé directement au plancher, par exemple par collage ou par vissage, ou maintenu parallèle à la paroi P de façon directe.

Le mode de fixation amovible illustré sur les figures 1-4 et 6, avec utilisation d'au moins une languette mâle 40 s'insérant dans une fente 20 correspondante n'est qu'un exemple illustratif. Bien entendu, la ou les fentes 20 peuvent être positionnées différemment, et ne s'étendent pas nécessairement à proximité ou au niveau d'une arête définie entre le panneau latéral qui recouvre la tranche 32 et un volet de retenue 19 sur lequel s'appuie le couvercle 6 à l'état fermé du module 1.

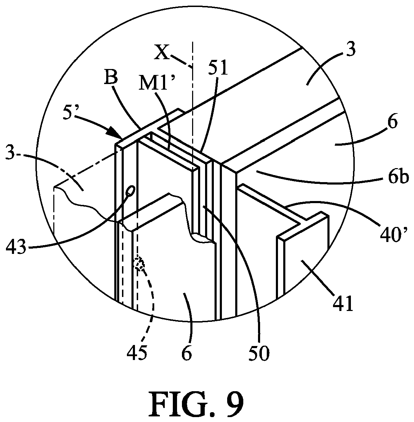

En référence à la figure 9, la languette mâle 40' peut le cas échéant être réalisée par un profilé 41, éventuellement détachable par rapport au couvercle 6. La fente 50 pour recevoir la languette 40' peut aussi, le cas échéant, être formée entre un profilé 5' qui fait partie des moyens de maintien du panneau 3 et un élément de bordure Ml' prévu pour un autre panneau 3 adjacent à la zone de fixation du couvercle 6. Un tel profilé 5' est par exemple pourvu d'une base B en contact avec les panneaux 3 du côté de la face arrière. Une branche intercalaire 51 est reliée à cette base B et forme un appui pour une tranche 32 du panneau 3. Optionnellement, la base B forme un premier côté de la partie de fond ou peut constituer la partie de fond du module 1.

Le profilé 5' peut présenter des trous 43 qui permettent un ancrage, par exemple en utilisant des vis à tête plate. Un pion ou pointeau 45 peut être utilisé pour fixer l'élément de bordure Ml' à la base B du profilé 5', en guidant le positionnement de cet élément de bordure Ml' pour qu'il soit parallèle à la branche intercalaire 51.

Ici, un ensemble profilé à deux branches parallèles est défini en fixant l'élément de bordure Ml' sur la base B, parallèlement à la branche intercalaire 51 et de façon à délimiter une fente 50 de largeur sensiblement constante pour recevoir de façon amovible la languette 40'. On a ainsi formé un ensemble profilé à deux branches parallèles 51, Ml' (branches perpendiculaires à la base B). Le verrouillage de la configuration de fermeture du couvercle 6 s'obtient en engageant le profilé 51 dans l'ensemble profilé 51, M1'.

Dans une variante de cet exemple, le profilé 41 est remplacé par une languette qui reste solidaire du couvercle 6. Dans tous les cas qui prévoient ce genre de fente 50, il suffit de retirer la languette 40' et écarter le couvercle 6 pour permettre l'inspection du panneau 3 de type PIV.

Dans d'autres variantes, on peut supprimer le profilé 5' et fixer directement l'élément de bordure Ml' à la paroi P à doubler. Une ou plusieurs fentes ou des empreintes peuvent optionnellement être prévues dans cet élément de bordure Ml' pour guider et recevoir des languettes 40 ou 40' formées du côté de la deuxième extrémité 6b du couvercle 6 (ces languettes étant de préférence mobiles avec le couvercle 6).

Il peut être avantageux de supprimer la plaque de la partie de fond 5 pour recouvrir le panneau 3 seulement par l'ensemble à couvercle M1', 6 qui est réalisé d'un seul tenant

Un des atouts du système d'isolation thermique 10 est, outre l'efficacité de son isolation thermique, de protéger efficacement les panneaux de type PIV grâce à l'utilisation d'enveloppes 4 ou d'éléments de bordure Ml' qui sont rapides à installer. Il est permis en outre de réduire l'épaisseur totale du système d'isolation 10 par rapport à des systèmes avec de nombreux éléments d'ossature en arrière et entre les tranches des panneaux 3 (avec une perte de performance du fait des ponts thermiques). Dans un mode de réalisation préféré, la couche isolante utilise seulement une couche de panneaux 3 et plus de la moitié (et de préférence au moins 75%) de l'épaisseur définie entre la face arrière de chaque panneau 3 de type PIV et la surface extérieure 60 est définie par l'épaisseur E3 des panneaux 3. En pratique, on peut obtenir des modules composites 1 dont l'épaisseur totale E1 est inférieure ou égale à 60 ou 65 mm et dont les zones de fixation vers l'arrière et/ou vers l'avant sont toutes située en dehors de l'espace intérieur V situé à l'arrière du couvercle 6.

Il doit être évident pour les personnes versées dans l'art que la présente invention permet des modes de réalisation sous de nombreuses autres formes spécifiques, sans l'éloigner du domaine d'application de l'invention comme revendiqué.

Ainsi, bien que le couvercle 6 est typiquement en contact avec la face déterminée F2 à l'état fermé du module composite 1, on peut aussi former un espace et/ou ajouter un élément de protection mécanique ou de protection à l'humidité entre cette face F2 et le couvercle 6.

L'axe de pivotement X a été illustré verticalement. Cependant, il est permis d'agencer cet axe différemment. On peut optionnellement prévoir un axe de pivotement X qui est horizontal, par exemple au moins pour une rangée horizontale supérieure. Ceci peut permettre de localiser la ou les zones de fixation de l'extrémité 6b du couvercle 6 au plus bas de cette rangée horizontale supérieure. Dans un tel cas, il est bien entendu permis de rendre jointives les tranches latérales 31, 32 du panneau 3 au sein de la rangée horizontale de modules composites 1.

Par ailleurs, le couvercle 6 peut être maintenu fermé à l'aide d'un ou plusieurs organes magnétiques (non représentés) qui coopèrent, dans la configuration de fermeture, par attraction magnétique avec un organe magnétique correspondant prévu dans les moyens de maintien (M1, M2, 5 ; M1', 5'). Dans le cas d'une fixation magnétique, une clé peut le cas échéant être utilisée pour faire cesser l'attraction magnétique lorsqu'elle est positionnée dans une zone d'interaction avec l'organe magnétique des moyens de maintien (par exemple en faisant pivoter cet organe magnétique, en modifiant son effet relatif d'attraction magnétique).

Il est aussi permis d'utiliser un mode de fixation par des éléments de verrouillage de type Velcro®, qui s'engagent mécaniquement, qui se fixent par utilisation d'un élément adhésif décollable, une ventouse sous vide pouvant être remise à pression par une seringue, ou une combinaison de ces éléments.

## Revendications

1. Module composite d'isolation thermique (1) pour doubler une paroi (P) de bâtiment ou définir une cloison de bâtiment, comprenant :
- des moyens de maintien (M1, M2, 5 ; M1', 5') adaptés pour former tout ou partie d'une périphérie latérale du module (1),
- un couvercle (6) présentant une première extrémité (6a) et une deuxième extrémité (6b) opposée à la première extrémité,
- un espace intérieur (V) délimité par les moyens de maintien (M1, M2, 5 ; M1', 5') et le couvercle (6) dans une première configuration de fermeture de l'espace intérieur,
- au moins un panneau isolant (3) qui a une forme de plaque et présente deux faces principales (F1, F2) et deux tranches opposées (31, 32) qui sont de préférence parallèles, ledit panneau isolant (3) étant logé dans l'espace intérieur (V) au moins dans la première configuration, de sorte que le couvercle (6) recouvre dans la première configuration tout ou partie d'une face déterminée (F2) choisie parmi les deux faces principales (F1, F2) ;
la deuxième extrémité (6b) du couvercle (6) étant mobile entre la première configuration fermée et une deuxième configuration d'accès à l'espace intérieur (V), le couvercle (6) étant :
- articulé de façon à alternativement écarter et rapprocher de l'une des deux tranches (32) la deuxième extrémité (6b) tout en maintenant tout ou partie de la première extrémité (6a) dans une position d'attache aux moyens de maintien (M1, M2, 5 ; M1', 5'), et
- adapté pour permettre une inspection de ladite face déterminée (F2) du panneau isolant (3) dans la deuxième configuration, **caractérisé en ce que**
le panneau isolant (3) comprend un matériau poreux (3a) résistant à la compression ainsi qu'une enveloppe barrière (2) étanche aux gaz, fermée sous vide, qui renferme le matériau poreux (3a),
le module comprenant en outre des moyens de fixation amovible pour réaliser un verrouillage de la première configuration de fermeture qui correspond à un état fermé du module, la mobilité entre la première configuration fermée et une deuxième configuration d'accès à l'espace intérieur (V) étant obtenue par déverrouillage des moyens de fixation amovible, l'inspection de ladite face déterminée (F2) du panneau isolant (3) dans la deuxième configuration étant permise après chaque déverrouillage.

2. Module composite selon la revendication 1, dans lequel les moyens de maintien (M1, M2, 5 ; M1', 5') comportent des éléments de fixation (7) pour attacher le module (1) à la paroi (P) à doubler, de préférence à distance de la première extrémité (6a) et de la deuxième extrémité (6b) du couvercle (6).

3. Module composite selon la revendication 1 ou 2, dans lequel le couvercle (6) comporte une partie d'obturation (OP) qui s'étend parallèlement à la face déterminée (F2) et perpendiculairement à la périphérie latérale du module (1) dans la première configuration.

4. Module composite selon une quelconque des revendications précédentes, dans lequel les moyens de maintien (M1, M2, 5 ; M1', 5') comportent :
- une partie de fond (5 ; B), incluant de préférence une plaque rigide, et
- un premier élément de bordure (M1 ; M1'), raccordé à un premier côté de la partie de fond (5 ; B) et relié à la première extrémité (6a) du couvercle (6), qui s'étend le long de l'une des deux tranches (31) du panneau isolant (3) .

5. Module composite selon la revendication 4, dans lequel au moins le premier élément de bordure (M1 ; M1') et le couvercle (6) sont formés d'un seul tenant.

6. Module composite selon la revendication 4 ou 5, dans lequel les moyens de maintien (M1, M2, 5) comportent en outre :
- un deuxième élément de bordure (M2), raccordé à un deuxième côté de la partie de fond (5), qui s'étend le long de l'autre des deux tranches (32) du panneau isolant (3), et
- au moins un volet de retenue (19), distinct du couvercle (6), relié au deuxième élément de bordure (M2) et recouvrant au moins une portion de marge de la face déterminée (F2).

7. Module composite selon la revendication 6, dans lequel l'un au moins parmi le deuxième élément de bordure (M2) et ledit volet de retenue (19) présente un organe de fixation pour maintenir le couvercle (6) dans la première configuration.

8. Module composite selon la revendication 6 ou 7, dans lequel le panneau isolant (3) a un format de panneau parallélépipédique, le premier élément de bordure (M1) et le deuxième élément de bordure (M2) étant parallèles et formant des éléments minces, de préférence en carton, l'un au moins parmi la partie de fond (5) et le couvercle (6) incluant une couche (14, 15) plus épaisse que les éléments minces, en particulier une plaque de plâtre.

9. Module composite selon une quelconque des revendications précédentes, dans lequel le couvercle (6) présente une surface externe (60) sensiblement plane et rigide avec une finition.

10. Module composite selon l'une quelconque des revendications précédentes, dans lequel le couvercle (6) est fixé de manière amovible aux moyens de maintien (M1, M2, 5 ; M1', 5') par au moins un élément d'attache choisi parmi :
- une languette mâle (40 ; 40') conçue pour s'insérer dans une fente (20 ; 50) correspondante prévue dans les moyens de maintien,
- une bande qui présente des organes de prise de type boucles et/ou crochets,
- une couche adhésive repositionnable,
- un organe magnétique qui coopère dans la configuration de fermeture par attraction magnétique avec un organe magnétique correspondant prévu dans les moyens de maintien.

11. Utilisation de modules composites (1) d'isolation thermique tels que définis dans l'une quelconque des revendications précédentes pour doubler une paroi de bâtiment ou définir une cloison de bâtiment, **caractérisée en ce que** plusieurs des modules composites (1) sont choisis avec une même largeur pour former une rangée (R1) en commençant par installer un premier module composite pourvu d'un premier couvercle (6) articulé et qui définit une extrémité inférieure de la rangée (R1) puis en positionnant un deuxième module composite (1) pourvu d'un deuxième couvercle articulé (6), de façon à mettre en contact bout à bout deux panneaux isolants (3) adjacents dont l'un est recouvert par le premier couvercle et l'autre est recouvert par le deuxième couvercle, ce grâce à quoi le premier couvercle et le deuxième couvercle font partie d'une même couche externe (CE) sensiblement plane.

12. Procédé d'assemblage utilisant un couvercle (6) opaque et au moins un panneau thermiquement isolant (3) de type PIV pour former un module composite (1) destiné à doubler une paroi (P) de bâtiment ou définir une cloison de bâtiment, le panneau (3) ayant une enveloppe barrière (2) étanche aux gaz conformée pour définir deux faces principales (F1, F2) et quatre tranches (30, 31, 32, 33) du panneau, le procédé comprenant les étapes consistant essentiellement à :
- placer ledit panneau (3) thermiquement isolant dans un espace intérieur (V) défini à l'arrière d'un couvercle (6) articulé, le couvercle étant articulé par rapport à au moins un élément de bordure (M1 ; M1') qui délimite partiellement l'espace intérieur (V), une des tranches (31) du panneau (3) étant maintenue contre ledit élément de bordure, parallèlement à un axe de pivotement (X) du couvercle (6),
- rabattre le couvercle (6) par rotation autour de l'axe de pivotement (X) et verrouiller par un mode de fixation amovible un état fermé du module (1) dans lequel le couvercle (6) s'étend parallèlement à une face déterminée (F2) choisie parmi les deux faces principales (F1, F2), de façon à recouvrir et ne plus rendre visible cette face déterminée,
le mode de fixation amovible permettant d'écarter une extrémité (6b) du couvercle (6) à distance de l'espace intérieur (V) par rotation autour de l'axe de pivotement (X), ce grâce à quoi on obtient un état ouvert du module qui permet une inspection de la face déterminée (F2) du panneau (3).

## Patentansprüche

1. Wärmedämm-Verbundmodul (1), um eine Gebäudewand (P) auszufüttern oder eine Gebäudetrennwand zu definieren, umfassend:
- Haltemittel (M1, M2, 5; M1', 5'), die geeignet sind, den gesamten oder einen Teil eines seitlichen Umfangs des Moduls (1) zu bilden,
- einen Deckel (6), der ein erstes Ende (6a) und ein zweites Ende (6b), das dem ersten Ende gegenüberliegt, aufweist,
- einen Innenraum (V), der durch die Haltemittel (M1, M2, 5; M1', 5') und den Deckel (6) in einer ersten Schließkonfiguration des Innenraums begrenzt ist,
- mindestens eine Dämmplatte (3), die die Form einer Platte aufweist und zwei Hauptflächen (F1, F2) und zwei gegenüberliegende Ränder (31, 32) aufweist, die vorzugsweise parallel sind, wobei die Dämmplatte (3) in dem Innenraum (V) mindestens in der ersten Konfiguration derart untergebracht ist, dass der Deckel (6) in der ersten Konfiguration die gesamte oder einen Teil einer bestimmten Fläche (F2) bedeckt, die aus den zwei Hauptflächen (F1, F2) ausgewählt ist;
wobei das zweite Ende (6b) des Deckels (6) zwischen der ersten geschlossenen Konfiguration und einer zweiten Zugangskonfiguration zu dem Innenraum (V) beweglich ist, wobei der Deckel (6):
- derart angelenkt ist, um das zweite Ende (6b) abwechselnd von einem der zwei Ränder (32) zu entfernen oder daran anzunähern und dabei gleichzeitig das ganze oder einen Teil des ersten Endes (6a) in einer Befestigungsposition an den Haltemitteln (M1, M2, 5; M1', 5') zu halten, und
- geeignet ist, eine Überprüfung der bestimmten Fläche (F2) der Dämmplatte (3) in der zweiten Konfiguration zu ermöglichen, **dadurch gekennzeichnet, dass**
die Dämmplatte (3) ein druckfestes, poröses Material (3a) und eine gasdichte Barrierehülle (2) aufweist, die unter Vakuum geschlossen ist, die das poröse Material (3a) enthält,
wobei das Modul ferner abnehmbare Befestigungsmittel aufweist, um das Verriegeln der ersten Schließkonfiguration durchzuführen, die einem geschlossenen Zustand des Moduls entspricht, wobei die Beweglichkeit zwischen der ersten geschlossenen Konfiguration und einer zweiten Zugangskonfiguration zu dem Innenraum (V) durch Entriegeln der abnehmbaren Befestigungsmittel erhalten wird, wobei die Überprüfung der bestimmten Fläche (F2) der Dämmplatte (3) in der zweiten Konfiguration nach jedem Entriegeln ermöglicht wird.

2. Verbundmodul nach Anspruch 1, wobei die Haltemittel (M1, M2, 5; M1', 5') Befestigungselemente (7) aufweisen, um das Modul (1) vorzugsweise in einem Abstand von dem ersten Ende (6a) und dem zweiten Ende (6b) des Deckels (6) an der auszufütternden Wand (P) anzubringen.

3. Verbundmodul nach Anspruch 1 oder 2, wobei der Deckel (6) einen Verschlussteil (OP) aufweist, der sich parallel zu der bestimmten Fläche (F2) und senkrecht zu dem seitlichen Umfang des Moduls (1) in der ersten Konfiguration erstreckt.

4. Verbundmodul nach einem der vorhergehenden Ansprüche, wobei die Haltemittel (M1, M2, 5; M1', 5') aufweisen:
- einen Bodenteil (5; B), der vorzugsweise eine starre Platte enthält, und
- ein erstes Einfassungselement (M1; M1), das an einer ersten Seite des Bodenteils (5; B) angeschlossen ist und mit dem ersten Ende (6a) des Deckels (6) verbunden ist, das sich entlang des einen der zwei Ränder (31) der Dämmplatte (3) erstreckt.

5. Verbundmodul nach Anspruch 4, wobei das mindestens erste Einfassungselement (M1; M1') und der Deckel (6) einstückig ausgebildet sind.

6. Verbundmodul nach Anspruch 4 oder 5, wobei die Haltemittel (M1, M2, 5) ferner aufweisen:
- ein zweites Einfassungselement (M2), das mit einer zweiten Seite des Bodenteils (5) verbunden ist, das sich entlang des anderen der zwei Ränder (32) der Dämmplatte (3) erstreckt, und
- mindestens eine Halteklappe (19), die von dem Deckel (6) verschieden ist, die mit dem zweiten Einfassungselement (M2) verbunden ist und mindestens einen Randabschnitt der bestimmten Fläche (F2) bedeckt.

7. Verbundmodul nach Anspruch 6, wobei mindestens eines unter dem zweiten Einfassungselement (M2) und der Halteklappe (19) ein Befestigungsorgan aufweist, um den Deckel (6) in der ersten Konfiguration zu halten.

8. Verbundmodul nach Anspruch 6 oder 7, wobei die Dämmplatte (3) ein Format einer parallelepipedförmigen Platte aufweist, wobei das erste Einfassungselement (M1) und das zweite Einfassungselement (M2) parallel sind und dünne Elemente, vorzugsweise aus Pappe, bilden, wobei mindestens eines unter dem Bodenteil (5) und dem Deckel (6) eine Schicht (14, 15) einschließt, die dicker als die dünnen Elemente ist, insbesondere eine Gipsplatte.

9. Verbundmodul nach einem der vorhergehenden Ansprüche, wobei der Deckel (6) eine äußere Oberfläche (60) aufweist, die im Wesentlichen eben und starr mit einer Schlussbeschichtung ist.

10. Verbundmodul nach einem der vorhergehenden Ansprüche, wobei der Deckel (6) an den Haltemitteln (M1, M2, 5; M1', 5') durch mindestens ein Befestigungselement abnehmbar befestigt ist, das ausgewählt ist aus:
- einer männlichen Lasche (40; 40'), die ausgebildet ist, um in einen entsprechenden Schlitz (20 ; 50) eingefügt zu werden, der in den Haltemitteln vorgesehen ist,
- einem Streifen, der Greiforgane des Typs der Schlaufen und/oder Haken aufweist,
- einer wiederaufbringbaren Klebeschicht,
- einem magnetischen Organ, das in der Schließkonfiguration durch magnetische Anziehung mit einem entsprechenden magnetischen Organ zusammenwirkt, das in den Haltemitteln vorgesehen ist.

11. Verwendung von Wärmedämm-Verbundmodulen (1) wie in einem der vorhergehenden Ansprüche definiert, um eine Gebäudewand auszufüttern oder eine Gebäudetrennwand zu definieren, **dadurch gekennzeichnet, dass** mehrere Verbundmodule (1) mit einer gleichen Breite ausgewählt werden, um eine Reihe (R1) zu bilden, indem damit begonnen wird, ein erstes Verbundmodul zu befestigen, das mit einem ersten angelenkten Deckel (6) versehen ist und das ein unteres Ende der Reihe (R1) definiert, und dann ein zweites Verbundmodul (1) angeordnet wird, das mit einem zweiten angelenkten Deckel (6) versehen ist, derart, um zwei benachbarte Dämmplatten (3) Ende an Ende in Kontakt zu bringen, von denen eine durch den ersten Deckel bedeckt wird und die andere durch den zweiten Deckel bedeckt wird, wodurch der erste Deckel und der zweite Deckel Teil einer gleichen äußeren Schicht (CE) sind, die im Wesentlichen eben ist.

12. Verfahren zum Zusammenbauen, das einen opaken Deckel (6) und mindestens eine Wärmedämmplatte (3) vom Typ der VIP-Platte verwendet, um ein Verbundmodul (1) zu bilden, das dazu bestimmt ist, eine Gebäudewand (P) auszufüttern oder eine Gebäudetrennwand zu definieren, wobei die Platte (3) eine gasdichte Barrierehülle (2) aufweist, die ausgebildet ist, um zwei Hauptflächen (F1, F2) und vier Ränder (30, 31, 32, 33) der Platte zu definieren, wobei das Verfahren die Schritte aufweist, die im Wesentlichen darin bestehen:
- die Wärmedämmplatte (3) in einem Innenraum (V) anzuordnen, der an der Rückseite eines angelenkten Deckels (6) definiert wird, wobei der Deckel in Bezug auf mindestens ein Einfassungselement (M1; M1') angelenkt wird, das den Innenraum (V) teilweise begrenzt, wobei einer der Ränder (31) der Platte (3) gegen das Einfassungselement parallel zu einer Schwenkachse (X) des Deckels (6) gehalten wird,
- den Deckel (6) durch Drehen um die Schwenkachse (X) umzuklappen und durch einen abnehmbaren Befestigungsmodus einen geschlossenen Zustand des Moduls (1) zu verriegeln, in dem sich der Deckel (6) parallel zu einer bestimmten Fläche (F2) erstreckt, die aus den zwei Hauptflächen (F1, F2) ausgewählt wird, derart, um diese bestimmte Fläche zu bedecken und nicht mehr sichtbar zu machen,
wobei der abnehmbare Befestigungsmodus ermöglicht, ein Ende (6b) des Deckels (6) in einem Abstand von dem Innenraum (V) durch Drehen um die Schwenkachse (X) zu entfernen, wodurch ein geöffneter Zustand des Moduls erhalten wird, der eine Überprüfung der bestimmten Fläche (F2) der Platte (3) ermöglicht.

## Claims

1. Composite thermal insulation module (1) for lining a building wall (P) or defining a building partition, comprising:
- retaining means (M1, M2, 5; M1', 5') suitable for forming all or part of a side periphery of the module (1),
- a cover (6) having a first end (6a) and a second end (6b) opposite the first end,
- an inner space (V) delimited by the retaining means (M1, M2, 5; M1', 5') and the cover (6) in a first configuration in which the inner space is closed,
- at least one insulation panel (3) in the shape of a board and having two main faces (F1, F2) and two opposite edges (31, 32) which are preferably parallel, said insulation panel (3) being housed inside the inner space (V) at least in the first configuration, such that the cover (6) covers, in the first configuration, all or part of a determined face (F2) chosen from among the two main faces (F1, F2);
the second end (6b) of the cover (6) being capable of moving between the first closed configuration and a second configuration allowing access to the inner space (V), the cover (6) being:
- articulated such that it alternatively moves the second end (6b) further away from and closer to one of the two edges (32), while maintaining all or part of the first end (6a) in a position in which it is fastened to the retaining means (M1, M2, 5; M1', 5'), and
- suitable for allowing an inspection of said determined face (F2) of the insulation panel (3) to take place in the second configuration, **characterised in that**
the insulation panel (3) comprises a porous material (3a) capable of withstanding compression and a gas-tight barrier shell (2) closed under a vacuum, which encloses the porous material (3a),
the module further comprising removable fastening means for locking in the first closed configuration, which corresponds to a closed state of the module, the mobility between the first closed configuration and a second configuration allowing access to the inner space (V) being obtained by unlocking the removable fastening means, the inspection of said determined face (F2) of the insulation panel (3) in the second configuration being possible after each unlocking operation.

2. Composite module according to claim 1, wherein the retaining means (M1, M2, 5; M1', 5') comprise fastening elements (7) for securing the module (1) to the wall (P) to be lined, preferably at a distance from the first end (6a) and from the second end (6b) of the cover (6).

3. Composite module according to either claim 1 or claim 2, wherein the cover (6) comprises a plugging portion (OP) extending parallel to the determined face (F2) and perpendicularly to the side periphery of the module (1) in the first configuration.

4. Composite module according to any of the previous claims, wherein the retaining means (M1, M2, 5; M1', 5') comprise:
- a bottom portion (5; B), preferably including a rigid board, and
- a first border element (M1; M1') connected to a first side of the bottom portion (5; B) and linked to the first end (6a) of the cover (6), which extends along one of the two edges (31) of the insulation panel (3).

5. Composite module according to claim 4, wherein at least the first border element (M1; M1') and the cover (6) are formed in one piece.

6. Composite module according to either claim 4 or claim 5, wherein the retaining means (M1, M2, 5) further comprise:
- a second border element (M2) connected to a second side of the bottom portion (5), which extends along the other of the two edges (32) of the insulation panel (3), and
- at least one retaining flap (19), separate from the cover (6), connected to the second border element (M2) and covering at least one margin portion of the determined face (F2).

7. Composite module according to claim 6, wherein at least one of the second border element (M2) and said retaining flap (19) has a fastening member for maintaining the cover (6) in the first configuration.

8. Composite module according to either claim 6 or claim 7, wherein the insulation panel (3) has the format of a parallelepipedal panel, the first border element (M1) and the second border element (M2) being parallel and forming thin elements, preferably made of card, at least one of the bottom portion (5) and the cover (6) including a layer (14, 15) that is thicker than the thin elements, in particular a plaster board.

9. Composite module according to any of the previous claims, wherein the cover (6) has an outer surface (60) that is substantially planar and rigid with a finishing.

10. Composite module according to any of the previous claims, wherein the cover (6) is fixed in a removable manner to the retaining means (M1, M2, 5; M1', 5') by at least one fastening element chosen from the group constituted from:
- a male tab (40; 40') designed to be inserted into a corresponding slot (20; 50) provided in the retaining means,
- a strip having engagement members of the loop and/or hook type,
- a repositionable adhesive layer,
- a magnetic member that engages in the closed configuration by magnetic attraction with a corresponding magnetic member provided in the retaining means.

11. Use of composite thermal insulation modules (1) as defined in any of the previous claims, for lining a building wall or defining a building partition, **characterised in that** a plurality of composite modules (1) are chosen with the same width to form a row (R1), beginning by installing a first composite module provided with a first articulated cover (6) and which defines a lower end of the row (R1), then by positioning a second composite module (1) provided with a second articulated cover (6), so as to place two adjacent insulation panels (3) in contact with one another end-to-end, one of which is covered by the first cover and the other of which is covered by the second cover, by way of which the first cover and the second cover form a part of the same substantially planar outer layer (CE).

12. Assembly method using an opaque cover (6) and at least one thermal insulation panel (3) of the VIP type to form a composite module (1) intended to line a building wall (P) or define a building partition, the panel (3) having a gas-tight barrier shell (2) shaped so as to define two main faces (F1, F2) and four edges (30, 31, 32, 33) of the panel, which method comprises the steps essentially of:
- placing said thermal insulation panel (3) in an inner space (V) defined behind an articulated cover (6), the cover being articulated relative to at least one border element (M1; M1') which partially delimits the inner space (V), one of the edges (31) of the panel (3) being maintained against said border element, parallel to a pivot axis (X) of the cover (6),
- folding back the cover (6) by rotation about the pivot axis (X) and locking, by a removable fastening mode, a closed state of the module (1) in which the cover (6) extends parallel to a determined face (F2) chosen from among the two main faces (F1, F2), so as to cover and conceal said determined face,
the removable fastening mode allowing one end (6b) of the cover (6) to be moved away from the inner space (V) by rotation about the pivot axis (X), by way of which an open state of the module is obtained, allowing the determined face (F2) of the panel (3) to be inspected.
